# EUROPEAN PATENT APPLICATION

(11) **EP 0 930 198 A2**
(43) Date of publication of application: **21.07.1999**
(21) Application number: 99100795.6
(22) Date of filing: 15.01.1999
(51) Int. Cl.: B60P 3/20

(54) **Isothermally and volumetrically improved refrigerating semi-trailer**

(30) Priority: 15.01.1998 IT BA980003
(71) Applicant: Bergamini & C.S.a.s. di Carlo Bergamini, 70124 Bari (IT)
(72) Inventor: Bergamini, Giorgio, 70124 Bari (IT); Martini, Salvatore, 48010 Mensa Matelica RA (IT)
(74) Representative: Provvisionato, Paolo

(57) **Abstract**

The improvement in the refrigerating properties of a semi-trailer has been achieved by arranging the evaporator along the entire length of the roof of the vehicle in order to activate a transverse instead of a longitudinal circulation of air, with the air rising along the walls aided by the thermosiphon effect, while descent takes place by way of the central gap which is obtained by arranging the load of the pallets transversely in two longitudinal rows instead of three, so that the useful capacity is increased from 33 to 34 pallets (6), as a result of moving the refrigerating unit (11) to a position below the platform, which also frees up space (13) at the front for a loose load equivalent to a 35th pallet.

## Description

The present invention relates to a novel arrangement and form of refrigerating semi-trailer based on a novel system of refrigeration which is extendable also to vans and trailers and which exploits the thermosiphon effect in order to facilitate an ascending flow of the cooling air along the side walls and the base of those vehicles, by activating, by means of refrigeration evaporator fans which are linear and are recessed into the roof, a transverse circulation of air with descent of the cold air along a central gap which is made possible by an arrangement of 34 pallets in two rows, instead of 33 pallets in three rows and by moving the refrigerating unit to a position under the platform, while re-ascent is forced to take place along only the side walls and the base, owing to suitable spacers which always guarantee a flow gap, and at the same time the traditional flow of air at the front and the back is impeded precisely owing to the 34 pallets which, by coming into abutment at the front and the back, eliminate air-circulation routes that are not useful because they detract from the flow along the walls.

In the constructions of the prior art, there is an evaporator unit which, arranged at the top, at the front of the semi-trailer, produces a tangential jet of air along the top of the load, while the suction of heated air takes place at a position a little lower down, again at the front of the vehicle.

Therefore, the cold air, which should theoretically descend around the load and return along the floor, under the pallets, in order to initiate longitudinal circular circulation, is impeded in its descent along the side walls, which are less thick and more extensive than the platform and the floor, owing to the fact that, since the majority of the heat enters from those walls, which thus make the maximum contribution to the heating of the air, the air, being heated by the thermosiphon effect, tends to rise instead of fall, with the result that the descending flow rate is reduced to the extent of being eliminated.

Therefore, it is mainly only the circulation under the pallets that is active if sufficient space has been left in the arrangement of the load at the front and the back of the vehicle, with the result that there is a kind of short-circuiting of the air which circulates without cooling the critical points.

That obstacle to the circulation of air along the walls makes it difficult to keep within the prescribed tolerances the temperature difference between the colder spots, typically between the top portion of the load, which is swept by the colder jet, and the goods along the walls, where circulation is minimal.

In order to reduce the temperature also in the hot spots, there is no other alternative than to super-cool the air, which has the disadvantage of "burning" the goods swept by the jet which is too cold, in addition to impairing the thermodynamic cooling cycle, with a waste of driving power.

The aim of the present invention is to improve the equality of temperature of the vehicle on the road by minimising the difference in temperature between the coldest spot and the hottest spot, and also by increasing the evaporation temperature in order to bring it close to the intended temperature for the transported goods, with the aim of improving the refrigerating efficiency and in order finally to obtain, owing to a novel air circulation arrangement, an increase in the transported volume from 33 to 34 pallets.

Those results were obtained in accordance with a feature of the present invention by using, for the circulation of air, the flue effect induced by the walls and by forcing an ascending flow along those walls with an overall flow rate which is much greater than that normally adopted in longitudinal circulation arrangements owing to another feature of the present invention which is constituted by the longitudinal arrangement, along the entire vehicle, of the evaporator unit which, being associated with a large number of fans of the tangential type characterised by an extremely limited bulk and by an extremely high overall capacity which is much higher than that of the usual centrifugal or axial fans, enables the differential between the temperature at the inlet and at the outlet of the evaporator to be reduced and the evaporation temperature to be increased, thus improving both the refrigerating efficiency and the equality of temperature.

According to a further feature of the present invention, the result of having 34 pallets available instead of the current 33 was obtained owing to the transverse circulation of air produced by eliminating the spaces at the front and back of the load which were necessary for the longitudinal circulation arrangement, and also owing to the recovery of the volume corresponding to the refrigerating unit arranged at the front, while the arrangement of the pallets transversely in two rows instead of lengthwise in threes enables the gaps to be reduced from four to three, and thus to be wider, and also permits the presence of a single gap axially relative to the vehicle where the air jet coming from the top creates a pressure suitable for forcing the transverse circulation of air.

When the load provided for cannot have sufficient air flow gaps in the centre of the load but only laterally along the walls, according to a further feature of the present invention vertical flow along the walls to be ascended is achieved, even with the 34 pallets, using fans arranged at the bottom of the circular front space, and using ducts which open out at the base of the pallets placed in abutment with a suitable step and which force the air to descend below the pallets in order to re-ascend along the walls.

For that functionality, it is possible to use, in addition to linear evaporators along the vehicle, a conventional compact evaporator which is placed at the front but which, unusually, is arranged with the cold jet facing downwards and with horizontal suction, which takes the air from the upper portion of the load, thus completely reversing the traditional longitudinal circulation.

In that case, the channel distributing the cold becomes substantially the space beneath the pallets while, in order to minimise the heat losses through the floor on this path, according to another feature of the present invention the thickness thereof has been substantially increased.

The invention will now be described in detail with reference to the following drawings:
- Figure 1. Sectional view of a semi-trailer having 33 pallets with conventional longitudinal circulation of the cooling air.
- Figure 2. Plan view of the same semi-trailer having 33 pallets.
- Figure 3. Cross-sectional view of the same vehicle with conventional circulation which descends along the walls.
- Figure 4. Sectional view of a semi-trailer having an increased volume, for the transport of 34 pallets plus loose load, longitudinal evaporator and transverse circulation of the cooling air.
- Figure 5. Plan view of the same with front abutments and sealing of the pallets and of the load.
- Figure 6. Cross-sectional view of the same with scheme of the transverse circulation of the cooling air.
- Figure 7. Sectional side view of a semi-trailer having an increased volume, provided with an internal evaporator at the front and with blowing under the pallets.
- Figure 8. View of the detail of the spacers suitable for providing a minimum gap for the flow of air.
- Figure 9. Cross-sectional detail of the system of the linear evaporators and the associated tangential fans recessed into the roof.
- Figure 10. Detail in longitudinal section of the linear evaporator system.
- Figure 11. Detail in longitudinal section of the lower fans introduced into the front abutment block of the pallets.
- Figure 12. Detail in longitudinal section of the hydraulic thrust system for packing the 34 pallets close together.
- Figure 13. Detail of the front abutment of the edges of the pallets and of the load with deformable insulation of the recess.

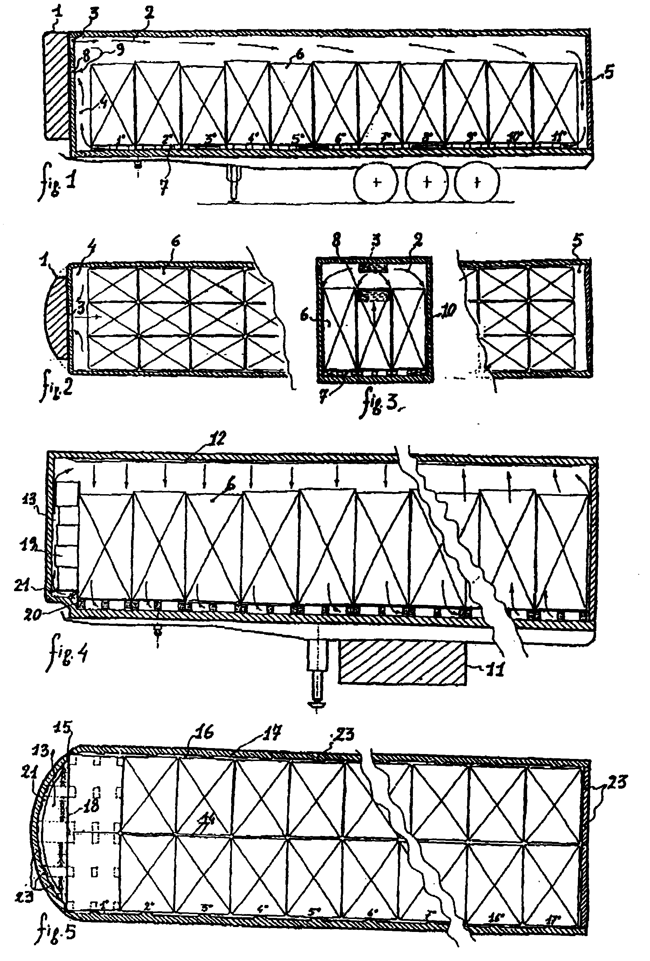

The prior art is described in Figure 1 with the view of a refrigerating semi-trailer of 33 pallets, in which semi-trailer a front-mounted refrigerating unit 1 projects a jet of cold air 2 axially relative to the vehicle from the top hole 3, bringing about longitudinal circular circulation made possible by the space at the front 4 of the vehicle and at the back 5 of the vehicle, and also by the channel below the load 6, provided by the pallets 7.

At the end of the circuit, the air is sucked in for cooling by the hole 8 arranged below the emission hole 3.

The line of flow 9 shows that some of the air does not make a complete circuit but is immediately sucked in again without being heated, thus contributing to the reduction in the temperature of the air and to the inefficiency of the system.

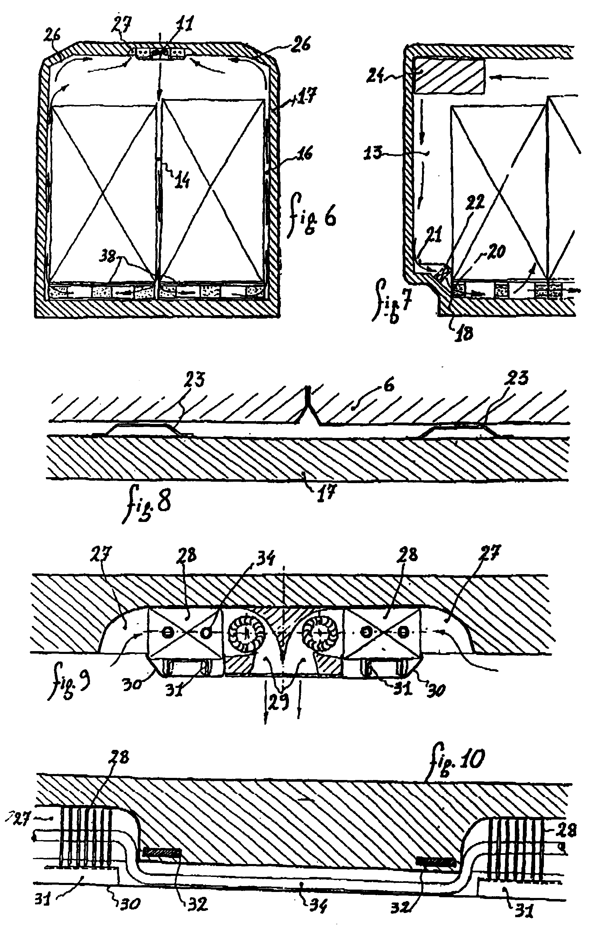

Figure 2 shows the conventional arrangement with 33 pallets in 11 rows of three, which makes available the spaces 4 and 5 at the front and back of the vehicle.

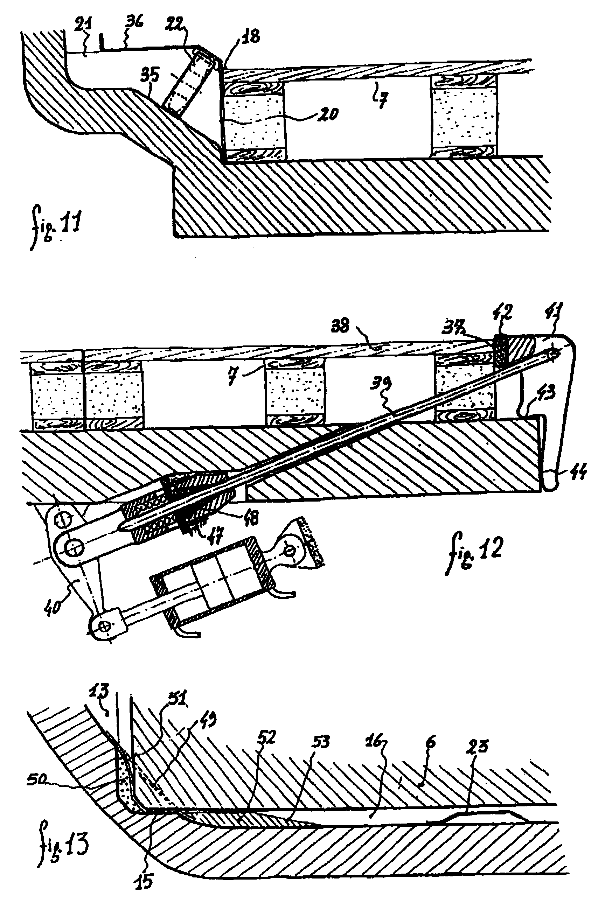

Figure 3 shows the transverse circulation from the top to the bottom along the side walls 10, which should remove the heat entering from those walls, and which is impeded by the tendency of heated air to rise rather than fall.

Figure 4, however, shows the novel arrangement with a lengthening of the internal volume until the circular region 13 is also occupied, which region 13 was previously occupied by the external refrigerating unit of Figure 1 which, in the novel arrangement and in accordance with a feature of the present invention, moves to the lower portion of the vehicle, in the case of the actual refrigerating unit 11, while the evaporator 12 which was previously integrated in the refrigerating unit 1, is spread out axially along the roof where it sucks in the air laterally and projects it with force and at a high flow rate (two or three times the conventional flow rate) towards the central gap 14 (see Figure 5), which is made possible by the transverse arrangement of the pallets in two rows.

With that arrangement, it is possible to install 34 pallets which occupy the entire space available, longitudinally, except for the curved front region 13 which is available for loading other goods, and therefore only transverse circulation is made possible and this is facilitated laterally with the rising flow precisely by the thermosiphon effect which is an obstacle in conventional circulation.

Figure 5 is a plan view of 34 pallets placed at the rear against the door of the semi-trailer, while, at the front, the side edges of the pallets and of the overlying load rest against the curvilinear front portion in suitable recesses, with a lateral centring guide 15, and in fact seal the two side gaps 16 between the load and the walls 17 from the front cavity 13 in such a manner that there is not a preferential route for the air flow, which would otherwise reduce, as in the traditional system, the efficiency of heat exchange by reducing the flow along the walls.

To that end, there is also in the lower portion at the front a sealing abutment 18 for the pallets, and therefore the circular front region can be used for the loose loading of the equivalent contents 19 of a 35th pallet without compromising the overall thermal efficiency, unlike the traditional system where the volume corresponding to the gaps 4 and 5 cannot be removed in favour of loading other loose goods without further compromising the refrigerating efficiency of the system.

The seal is not, however, hermetic because a small amount of air has to rise along the curvilinear front wall in order to remove the heat it carries and, to that end, a system of openings 20, gaps 21 and other flow-limiting devices, constituted by a series of stationary axial fans 22, bring the region below the pallets 6 into communication with the circular front region 13.

In order to ensure a permanent flow of air along the side walls 15, according to a further feature of the present invention, the walls 15 have been provided with upright omega-shaped protuberances 23 (see Figure 8) which are of a metal type or which are moulded onto the walls and which can ensure permanent flow, even when the load is supported there, during loading or travel.

Similar devices 23 are, however, provided both on the curvilinear front surface and on the rear portion in order to ensure that, if there is no air flow, there are no hot spots, not just on the side walls, but in those areas also.

If the type of load does not permit the presence of a central gap 14 along the axis of the vehicle then, while preserving the ascending vertical flow along the walls, which characterises the present invention, it is possible to reverse the flow in the above-mentioned circular front region 13, which in that case must remain free from any additional load other than that of the 34 pallets, by means of circulation-activating fans 22 (see Figure 10) which, when stationary, constitute a desired obstacle to the circulation of air, with circular movement in the clockwise direction, and, when set in motion, activate an opposite, anticlockwise, flow which carries cold air under the pallets, which air can rise again along all the sides.

The hybrid longitudinal/transverse circulation arrangement is possible both with the initially described linear refrigeration fans 12 and with a conventional refrigeration evaporator fan 24 (see Figure 7) of the type used on vans and trailers, but unusually mounted at the front of the semi-trailer, with front longitudinal suction 25 and with the jet of cold air projected downwards in such a manner as to feed the lower region beneath the pallets with cold air, thanks also to the lower fans 22 of Figure 10.

In order to maximise the refrigerating efficiency under difficult conditions in a semi-trailer, there is an implicit possibility of combining the two systems by mounting two refrigerating units 11 in the lower portion, one connected to the linear evaporator 12 and the other connected to the compact front evaporator 24, and by causing them to operate simultaneously, and by activating flow with the fans 22, again in order to avoid the defects of the conventional system.

In order to facilitate transverse circulation, another arrangement characterising the present invention consists in a rounded portion or connecting surface 26 on the inner edge (Figure 6), along the two side walls, which is capable of sending, without loss of kinetic energy, the sheet of hotter air running along the walls directly towards the suction holes 27 (Figure 9) of the linear evaporator 12 which is shown in cross-section in Figure 9 and in longitudinal section in Figure 10.

The inclined surface 26, according to a further feature of the present invention, also permits the maintenance of a sufficient thickness of the roof which would become excessively thin if the external profile of the edge of the vehicle were shaped in accordance with the requirements of the rail transportation of road semi-trailers.

The linear evaporator is characterised in that two thirds of it is recessed into the roof, according to a preferred embodiment of the present invention, but it could be entirely outside, preserving its characteristic nature which consists in being composed of two finned evaporators 28 which have the air inlet 27 on the side, externally, while, internally, two tangential fans 29 arranged back to back suck in the air horizontally and project it downwards.

The invention is characterised by continuous double fairing 30 which, in addition to confining the flow of air in the finned volume of the evaporator 28, owing also to an inverted channel-shaped profile 31 which is used to prevent a short-circuiting of the flow in the cavity of the fairing 30, which also has a channel-shaped geometry, is used to collect and convey the defrosting water to the front and rear ends of the semi-trailer.

Between one element and the other of the evaporating units 28 in Figure 10, the roof reassumes its normal thickness in order also to accommodate the transverse reinforcing elements 32 which are necessary for anchoring guide rails when the vehicle is transporting hanging pieces of meat.

In order to pass round those elements, between one recess and the other in the roof 33, not only but also when the whole is not recessed, the tubes 34 conducting the refrigerating fluid are, in accordance with a further feature of the present invention, bent downwards until they touch the fairing 30.

That is done in order to heat those channels, which, being arranged at a long distance from the finned surface, could freeze and block the defrosting water which falls from the above-mentioned finned surfaces.

A further feature of the present invention is the structure of the lower front abutment 18 of the pallets 7 which is shown in Figure 11, where suitable inclined surfaces 35 permit the confinement of a series of axial fans 22 which are inclined perpendicularly to the above-mentioned surfaces 35 and which are held in position and also protected by a plate 36, which is suitably bent, in such a manner as to present a series of horizontal openings in the region of the holes 20 of the bases of the pallets 7, while, horizontally, the plate, in addition to acting as a bearing surface for any additional loose load 19, gives rise to a gap 21 for the flow of air along the wall.

The description of the invention is completed by a final feature which is necessary in order to be able effectively to arrange all 34 pallets in abutment relative to one another in the longitudinal direction, the play characterising the traditional load with 33 pallets not being available.

The feature concerned is the thrust packing mechanism shown in Figure 12 which makes it possible to apply a force along the entire upper edge of the pallet 37 in the region of the rear door of the semi-trailer, in such a manner as to affect all of the cross-members 38 of the bearing surface of the pallet in order not to break them.

The mechanism is a system of four tension rods 39 of which, for the sake of simplicity, Figure 12 shows only one, and which are arranged diagonally in such a manner as to pass through the middle of the first or the second channel, between the pallet supports. The tension rods 39 are, at one end, placed under tension by a system of levers 40, which are connected to a hydraulic piston or to a screw mechanism anchored to the frame below, while, at the other end, they are articulated to levers 41 characterised in that they have a rubber abutment line 42 extending over the entire width of each pallet, a bearing point 43 on the platform of the semi-trailer in order to react to the vertical component of the inclined tensile force, and, at the lower portion, a bearing point 44 which is used to carry the tensile force of the tension rod to the line 37 of bearing on the cross-members 38.

Two features characterise the invention and permit its practical functionality. The first is a mechanism which has a spring and cone segments 48 which, even if there is a very great enlargement of the lever system 40 and therefore a very small useful travel, permits recovery of all the play, movement of the lever 41 into abutment and the immediate availability of the packing thrust, without dead travel of the levers 40 and of the piston. If greater travel is required, it is necessary only to repeat the reciprocating manoeuvre without other adjusting interventions, which is provided for entirely by the mechanism having a spring and cone segments 48.

The second feature which facilitates the operation of the system is constituted by an abutment 47 which enables the cones 48 to be unlocked when, after performing a traction run, the piston returns to actuate the above-mentioned unlocking system in order to recover the play without force.
Finally, the invention is characterised by a flexible membrane 49 (Figure 13) which is adhesively bonded over the guide recess 15 for the front abutment of the first two pallets, which are in contact with one another (Figure 5), in order to reduce the longitudinal bulk of the load relative to the constraint imposed by the cylindrical front surface (Figure 13), unlike the following pallets which are separate from one another in order to permit the flow of descending air in the gap 14, confining inside the recess a very light compressible material 50 which is characterised by good isothermal properties, such as, for example, artificial down, although that is not to constitute a limitation.

The function of the membrane is, by being deformed and adapted 51 to the shape of both the load 6 and the pallet 7, to provide a better seal for the gap 16 along the walls of the front region 13, at the same time limiting the thermal losses which the recess involves.

The invention is characterised by the presence, at the lower portion and at the level of the pallets, of two profiled sections 52 which, by means of a ramp 53, enable the pallet to be guided so that it can be centred exactly on the abutment 18 and in the recess 15, in order to enable the pair of pallets to be as far forward as possible.

## Claims

1. An improved refrigerating semi-trailer comprising a refrigeration evaporator device which forces a circulation of air inside the semi-trailer to keep the goods supported by a plurality of pallets at a predetermined temperature, characterised in that said pallets are arranged within the semi-trailer in two longitudinal rows, transversally spaced in order to create a central longitudinal flow gap for a forced circulation of air.

2. An improved refrigerating semi-trailer according to claim 1, based on the use of a refrigeration evaporator fan device of linear type, arranged along the entire roof axially and partially recessed into the roof, which forces a transverse circulation of air from a jet from the top to the bottom in the centre where, to that end, the pallets have been arranged transversely in two rows in order to create a gap for the descent of cold air which, passing below the pallets, is forced to rise vertically along the walls, the back and also along the front wall, through gaps provided by suitable spacers which prevent the load from blocking the flow of air, in order to be conveyed by suitable inclined surfaces towards the lateral suction openings of the above-mentioned evaporator devices, while the increase in the number of pallets from 33 to 34, by filling all the space available, enables the possible short-circuit routes of the stream of cold air at the front and the back to be eliminated.

3. An improved refrigerating semi-trailer according to claim 2, characterised in that the above-mentioned arrangement of the pallets transversely in two rows, instead of in threes longitudinally, and the arrangement of the refrigeration fan along the roof, permit the accommodation of 34 pallets, eliminating the previous dead spaces, after packing the pallets close together, and, by moving the refrigerating unit from the current front position to a position below the platform, also permit the recovery of fresh space at the front which is circular and which can be used for loose loading the equivalent of the load of a 35th pallet, the space being sealed laterally by the edges of the front pallets and the associated load which are brought into abutment with suitable lateral recesses in the circular front wall, while the abutment of the pallets at the lower portion is provided with gaps and devices for limiting flow which are suitable for permitting a limited rate of flow but not an excess rate of flow detrimental to the predominant flow along the side walls.

4. An improved refrigerating semi-trailer according to claim 2, characterised in that, if the load does not have a central gap sufficient for the passage of all of the refrigerating air that has to circulate, there are arranged at the bottom front edge circulation fans suitable for promoting a flow of cold air from the top to the bottom in such a manner as also to initiate, but only above and below the load, a longitudinal circular flow which is again effected with an ascending vertical motion along the walls and the back.

5. An improved refrigerating semi-trailer according to claim 4, characterised in that the above-mentioned longitudinal circulation passes through a second refrigeration evaporator fan arranged at the front of the vehicle and orientated in such a manner as to suck in air axially and project the cold jet downwards in the direction towards the above-mentioned circulation fans.

6. An improved refrigerating semi-trailer according to claim 5, characterised in that, under non-onerous conditions, the above-mentioned second evaporator arranged at the front and aided by the circulation fans below, can by itself, without the longitudinal linear refrigeration fan, perform the task of refrigerating the load, nevertheless functioning better in terms of efficiency than a unit of equal power placed in the same position but functioning in a conventional manner, with horizontal blowing.

7. An improved refrigerating semi-trailer according to claim 2, characterised in that the above-mentioned spacers which, arranged vertically along all of the side walls, the front end and the rear door, in order to ensure that the cooling air rises again, can be formed either by grooves formed on the walls or by the application of omega-shaped metal profiled sections which can be used also for securing intermediate shelves.

8. An improved refrigerating semi-trailer according to claim 2, characterised in that the above-mentioned inclined surface or rounded portion along the sides of the roof extends along the entire vehicle, including the rear doors, which are also provided with a rounded portion, and combines with the upper profile of the roof which is shaped in accordance with the standard railway template, for multi-mode transport, in order to obtain a greater useful internal height and to limit the points of minimum thickness of the insulation.

9. An improved refrigerating semi-trailer according to claims 3 and 4, characterised in that the above-mentioned devices for limiting the ascending flow of air in the front region, in order to distribute the ascending cooling flow uniformly along the entire perimeter, are constituted by fans of both the axial and tangential type like those of the evaporator on the roof, which are not supplied with power, that is to say stationary and which, when started up, can, when the conditions of the load require it, activate a circulation of air from the top to the bottom at a high flow rate.

10. An improved refrigerating semi-trailer according to claim 2, characterised in that the above-mentioned linear refrigeration fan, completed by pairs of tangential fans which are arranged back to back and next to pairs of linear finned evaporators, move the air downwards on the axis of the vehicle, sucking it in from lateral holes, with the aid of a continuous double metal fairing which, in addition to forcing the air to flow only inside the evaporators, acts as a drainage channel for the defrosting water in order to convey it to the front and back of the semi-trailer.

11. An improved refrigerating semi-trailer according to claim 10, characterised in that the tubes for connecting the above-mentioned linear finned evaporators are bent downwards between one element and another until they touch the base of the above-mentioned channels for conveying the defrosting water which are constituted by fairing.

12. An improved refrigerating semi-trailer according to claim 2, characterised in that the above-mentioned packing of the pallets close together in order to accommodate 34 pallets is effected, upon completion of loading, by means of inclined tension rods which pass through the floor and act with the aid of levers connected to a transverse element which bears, with the interposition of a rubber abutment line, along the entire upper edge of the pallet, and are placed under tension by hydraulic or mechanical devices which are characterised in that they are coupled to the above-mentioned tension rods by a joint having cone segments which automatically secures the tension rods, while release is effected, when the operation is complete, by means of a travel-limit system, at the rear, which automatically releases the above-mentioned cone segments.

13. An improved refrigerating semi-trailer according to claim 3, characterised in that the above-mentioned side recesses in the circular front wall, which reduce locally to a considerable degree the thickness of the wall and therefore also the insulation, are covered with a resilient membrane which confines in the above-mentioned recesses a pliable insulating material, such as artificial down or flexible sponge, thus reconstructing the thermal integrity of the wall and, in the presence of a non-standard load of the pallet along the front edge, also achieving sealing of the circular front region from the adjacent lateral walls by adaptation to the load, in order to prevent short-circuiting of the cooling air.

14. An improved refrigerating semi-trailer according to claim 6, characterised in that, even with a standard refrigerating unit positioned in the front portion of the vehicle and provided with fairing suitable for forcing the cold air downwards and even if the load thus has 33 pallets, by installing at the bottom of the front portion a complete abutment casing for the pallets, containing a line of fans capable of forcing the air to descend below the pallets, it is possible to achieve an ascending movement of air along the walls provided that, at the rear, the pallets just touch the door and provided that, by any means, the gap between the front space and the side walls is limited.

15. An improved refrigerating semi-trailer according to claim 14, characterised in that the above-mentioned line of fans may alternatively be substituted by the connection of the casing to the above-mentioned fairing which guides the cold air downwards.
